# EUROPEAN PATENT APPLICATION

(11) **EP 2 157 059 A1**
(43) Date of publication of application: **24.02.2010**
(21) Application number: 08739916.8
(22) Date of filing: 04.04.2008
(51) Int. Cl.: C03B 33/037, B28D 1/24

(54) **DEVICE AND METHOD FOR MAKING CUT LINE IN STRIP SHEET GLASS, AND METHOD FOR PRODUCING STRIP SHEET GLASS**

(30) Priority: 27.04.2007 JP 2007119254
(71) Applicant: Asahi Glass Company, Limited, Chiyoda-ku Tokyo 100-8405 (JP)
(72) Inventor: IWAHASHI, Nobuhisa, Tokyo 100-8405 (JP); KUNISADA, Kazuhiro, Tokyo 100-8405 (JP); OKINO, Naoki, Katori-shi Chiba 289-0411 (JP)
(74) Representative: Müller-Boré & Partner Patentanwälte
(86) International application number: PCT/JP2008/056810
(87) International publication number: WO 2008/136239

(57) **Abstract**

Presented is a method for forming a score line in a belt-like sheet glass, which can form a score line for snapping well a belt-like sheet glass without generating cullet at a starting point of scoring with a cutter.

By employing a servo motor of high response as an advancing/retracting means which imparts a pressing force to a cutter and advances or retracts the cutter with respect to the belt-like sheet glass, and a parallel link mechanism for transmitting directly a rotary motion of the servo motor to advancing/retracting motions of the cutter, a score line can be formed in parallel to the direction of conveyance of belt-like sheet glass. Further, torque control is carried out so that the pressing force of the cutter at a first stage is smaller than the pressing force at a second stage wherein the pressing force of the cutter at a first stage takes place when the cutter is brought in contact with the belt-like sheet glass to start scoring and the pressing force at a second stage takes place subsequently from the start of the scoring.

## Description

### TECHNICAL FIELD

The present invention relates to apparatus and method for forming a score line in a belt-like sheet glass and a method for producing a sheet glass, in particular, it relates to apparatus and method for forming a score line in a belt-like sheet glass in a state of conveyance wherein a score line is formed in the belt-like sheet glass with a cutter so that various types of sheet glass article for automobiles or the like are cut off from the belt-like sheet glass in conveyance, and a method for producing a sheet glass using such method.

### BACKGROUND ART

As the method for producing a sheet glass as a glass article for automobiles or the like, there is known a method called the float method as described in, for example, Patent Document 1. This float method is such a method that molten glass is poured onto tin in a molten tin bath, the molten glass spreading on the tin to become a glass ribbon, so that a belt-like sheet glass having a predetermined thickness is finally formed. According to this method, in order to form a belt-like sheet glass having a predetermined thickness, rotating edge rollers are brought in contact with the surface of the edge portions of the glass ribbon to pull the glass ribbon breadthwise toward their outer sides. The belt-like sheet glass formed in the molten tin bath is drawn to the lehr (the annealing section) via lehr rollers disposed at a downstream side of the molten tin bath, in which it is cooled to a predetermined temperature, and then, the belt-like sheet glass is successively conveyed to a snapping apparatus by means of a roller conveyor or the like to be snapped in a sheet glass having a desired size. The snapped sheet glass articles are conveyed via a roller conveyor to a predetermined branch (a container) and they are mounted one by one on a pallet or the like to be taken as final products or intermediate products.

The snapping apparatus comprises a score line forming apparatus disposed at an upstream side in a direction of conveyance of belt-like sheet glass and a snapping apparatus disposed at a downstream side thereof. The score line forming apparatus comprises a longitudinal score line forming machine disposed at an upstream side in a direction of conveyance of belt-like sheet glass and a transverse score line forming machine disposed at a downstream side thereof. The longitudinal score line forming machine forms longitudinal score lines in a belt-like sheet glass in parallel to a direction of conveyance of belt-like sheet glass with the cutters and the transverse score line forming machine disposed at a downstream side thereof forms transverse score lines in the belt-like sheet glass in a direction perpendicular to a direction of conveyance of belt-like sheet glass with the cutter. Thus, score lines are formed in the belt-like sheet glass at positions for desired shapes and then, the belt-like sheet glass is snapped in rectangular sheet glass articles of desired size in the snapping apparatus.

The conventional score line forming method, which is called touch-cutting, has been carried out to obtain a plurality of sheet glass articles having different sizes at once without waste from a belt-like sheet glass having been annealed in the lehr. For this score line forming method, a plurality of longitudinal score line forming machines arranged side by side are used and score line forming motion of the cutter of each longitudinal score line forming machine is subjected to on/off control (for example, the motion is controlled in synchronism with a speed of conveyance for a belt-like sheet glass) whereby score lines for cutting off a plurality of sheet glass articles having desired sizes can be formed in the belt-like sheet glass in conveyance.

In this score line forming method called the touch-cutting, it is desired to minimize as possible the distance between the edge point of a longitudinal score line formed by the longitudinal score line forming machine and a transverse score line formed by the transverse score line forming machine. In case that the above-mentioned distance is large, there is a shortage of the longitudinal score line with respect to the length of a side of the sheet glass to be cut off in parallel to a direction of conveyance of sheet glass. Accordingly, when the belt-like sheet glass is snapped to obtain a supposed sheet glass, a crack deviates from the intended direction in the area without the longitudinal score line, whereby a default such as a lack of corner takes place in the sheet glass article. On the other hand, in case that the longitudinal score line extends to the area of a sheet glass supposed to be cut off at the upstream side in the direction of conveyance, beyond the crossing point of the longitudinal and transverse score lines, the sheet glass of upstream side becomes a faulty product.

It is extremely difficult to coincide completely the edge point of a longitudinal score line to a transverse score line owing to external factors such as an error in the speed of conveyance of belt-like sheet glass, a mechanical error in the longitudinal score line forming machine or the transverse score line forming machine, the wearing of the cutter thereof and so on. Accordingly, in order to minimize the above-mentioned distance as possible provided that the longitudinal score line does not extend to the area of belt-like sheet glass of upstream side, it is necessary to conduct precisely an on/off control to the score line forming motion of a cutter of the longitudinal score line forming machine, namely, the control of advancing/retracting motion of the cutter to a belt-like sheet glass in conveyance. Here, the advancing/retracting motion of the cutter means a vertical motion to make the cutter contact with the belt-like sheet glass and to make the cutter retract from it.

As disclosed in Patent Document 2, the control of advancing/retracting motion of the cutter has been conducted as follows. The cutter is disposed so as to advance to or retract from a sheet glass with use of a pressing means such as linear motor, electromagnet, air cylinder, which presses the cutter to the sheet glass, and the motion of the pressing means is so controlled that the cutter is subjected to the advancing/retracting control. Patent Document 3 discloses that a servo motor gives to a cutter a pressing force against a sheet glass and a score line is formed by controlling the torque of the servo motor. The mechanism for advancing/retracting the cutter described in Patent Document 3 is a gear type feeding mechanism consisting of a rack and a pinion, driven by the servo motor.
Patent Document 1: JP-A-8-277131
Patent Document 2: JP-A-8-225333
Patent Document 3: JP-A-2001-206727

### DISCLOSURE OF THE INVENTION

### TECHNICAL PROBLEM

The apparatuses for forming a score line in a sheet glass disclosed in Patent Documents 2 and 3 are to form score lines by traveling the cutter on a sheet glass placed standing still, these techniques being different from the technique called the touch-cutting wherein a score line is formed in a belt-like sheet glass by advancing and retracting the cutter to a belt-like sheet glass in conveyance. However, when the advancing/retracting motion to the cutter is controlled by using the pressing means such as linear motor, electromagnet, air cylinder or the like, as disclosed in Patent Document 2, there was a disadvantage that a satisfactory control could not be obtained because of a poor response. For example, when the cutter was retracted from a conveyed belt-like sheet glass, a shallow portion was left in the score line at the position of retraction of the cutter because of its poor response, the shallow score line resulting possibly a sheet glass having a lack of corner.

On the other hand, when the servo motor is employed as described in Patent Document 3, the response is improved remarkably so that it is possible to carry out precisely the advancing/retracting motion of the cutter. In Patent Document 3, however, since the gear type feeding mechanism consisting of a rack and a pinion is employed as an advancing/retracting mechanism in spite of using the servo motor, a precise control cannot be expected because there is a play of backlash. Accordingly it had the same problem as Patent Document 2. In Patent Document 3, although the torque of the servo motor is controlled to control the pressing force against the sheet glass, it is difficult to control it at a predetermined value because of a play in a gear type feeding mechanism. Accordingly, there was a problem of generating cullet during the scoring. It is because the plane of a belt-like sheet glass has a minute deformation of shape (herein-below, referred to as the deformation of sheet plane) such as unevenness in a sheet plane (a deformation of shape due to a temporary strain derived from a temperature difference in the sheet plane before the belt-like sheet glass is cut off) and a curve (a deformation of shape due to a permanent strain), depending on circumstances during the production of the belt-like sheet glass. Such gear type feeding mechanism of poor response cannot follow well such minute deformation of sheet plane.

In addition, in the conventional score line forming apparatus, the same pressing force was applied continuously to the cutter at the time of starting scoring and during scoring. Accordingly, cullet was generated at the time of starting scoring owing to a strong impact. The generated cullet damages the plane of the belt-like sheet glass and the yield of production deteriorates.

The present invention has been made in view of these problems and it is an object of the present invention to provide apparatus and method for forming a score line in a belt-like sheet glass wherein an advancing/retracting means of high response is employed, this means giving to the cutter a pressing force and making the cutter advance to or retract from the belt-like sheet glass whereby it is possible to form a score line by which the belt-like sheet glass can be snapped well and it is possible to form such score line without generating cullet at the starting point of scoring, and a method for producing a sheet glass using such method.

### SOLUTION TO PROBLEM

In order to achieve the above-mentioned object, the present invention has such subject that a score line is formed in a belt-like sheet glass in conveyance with a first cutter in parallel to a direction of conveyance of belt-like sheet glass in a manner that motions of the cutter to form the score line are effected by a servo motor whose torque is controlled and the torque of the servo motor is transmitted to the cutter via a link mechanism, as described below.

Namely, according to the present invention, there is provided an apparatus for forming a score line in a belt-like sheet glass characterized by comprising a first cutter for forming in a belt-like sheet glass in conveyance a score line in parallel to a direction of conveyance, a rotating device having a link mechanism capable of advancing or retracting the first cutter with respect to the belt-like sheet glass wherein the first cutter is provided on the link mechanism, a servo motor connected to the rotating shaft of the rotating device at its base portion to swing the rotating device toward the belt-like sheet glass so that a pressing force is produced to the first cutter with respect to the belt-like sheet glass, and a control means to control the torque of the servo motor so that the pressing force of the first cutter to the belt-like sheet glass at the time of starting scoring is smaller than the pressing force after the start of scoring.

Further, according to the present invention, there is provided a method for forming a score line in a belt-like sheet glass wherein when a score line is formed with a first cutter in a belt-like sheet glass in conveyance, in parallel to a direction of conveyance of belt-like sheet glass, the torque of a servo motor is controlled by a control means and the controlled torque is transmitted to the first cutter via a link mechanism to form a score line in the belt-like sheet glass, the method for forming a score line in a belt-like sheet glass being characterized by comprising a first scoring step of controlling the torque of the servo motor by the control means so that the pressing force of the first cutter to the belt-like sheet glass at the time of starting scoring is smaller than the pressing force after the start of scoring.

Further, according to the present invention, there is provided a method for producing a sheet glass comprising a step of forming a belt-like sheet glass by a float method, a step of forming a score line in the belt-like sheet glass and a step of taking a sheet glass by snapping the scored belt-like sheet glass, the method being characterized by employing a method for forming a score line in a belt-like sheet glass as described above.

### ADVANTAGEOUS EFFECT OF INVENTION

According to the present invention, a pressing force is given to the cutter; a servo motor of high response is employed as an advancing/retracting means for advancing the cutter to and retracting it from a belt-like sheet glass and a link mechanism capable of converting directly the rotating motion of the servo motor to the advancing/retracting motion of the cutter is used whereby it is possible to form in a belt-like sheet glass a score line for snapping well to obtain a sheet glass article.

Namely, in the first scoring step, the torque of the servo motor of high response is controlled so as to give to the first cutter a pressing force of first stage at the time of starting scoring when the first cutter is brought in contact with the belt-like sheet glass and thereafter, to give it a pressing force of second stage wherein the pressing force of first stage is made smaller than the pressing force of second stage, whereby the score line can be formed well without generating cullet at the starting point of scoring of the cutter and the yield of production of sheet glass can be improved.

Further, since the first cutter is provided on the top of the link mechanism and the rotating shaft of the servo motor is connected directly to the rotating shaft of the link mechanism, the control of the torque by the servo motor, i.e., the control of the pressing force of the first cutter to the belt-like sheet glass is improved remarkably in comparison with the advancing/retracting mechanism such as the gear type feeding mechanism which converts the rotating motion of the servo motor to a straight motion. Accordingly, response to the advancing/retracting motion of the first cutter with respect to the belt-like sheet glass becomes better and therefore, it can follow a relatively large deformation of sheet plane of the belt-like sheet glass.

Further, since the first cutter is provided at the top of the link mechanism and the rotating shaft of the servo motor is connected directly to the rotating shaft of the link mechanism, response to the refracting movement of the first cutter is high in comparison with the advancing/retracting mechanism such as the gear type feeding mechanism which converts the rotating motion of the servo motor to a straight motion. Accordingly, the first cutter can be instantaneously retracted from the belt-like sheet glass at the position at which scoring by the first cutter finished (herein-below, referred to as the scoring finishing point).

Accordingly, there is little risk that a score line having a shallow cut portion remains in the belt-like sheet glass near the scoring finishing point as in the conventional technique, and it can effectively avoid a lack of corner.

### BRIEF DESCRIPTION OF THE DRAWINGS

Fig. 1 is a perspective view showing an important portion of the apparatus for forming a score line in belt-like sheet glass according to an embodiment.
Fig. 2 is a plane view of the apparatus for forming a score line shown in Fig. 1.
Fig. 3 is a diagram for explaining the method for forming a score line according to a touch-cutting method.
Fig. 4 is diagrams showing the portions of a parallel link constituting an advancing/retracting means for the cutter wherein Fig. 4(A) is a diagram showing a state of scoring and Fig. 4(B) is a diagram showing a state of the retraction of the cutter.
Fig. 5 is a block diagram showing the structure of the apparatus for forming a score line according to the embodiment.
Fig. 6 is a graph showing a relation of the length of scoring to the pressing force for explaining a two stage torque control.
Fig. 7(A) is a cross-sectional view of a belt-like sheet glass G in which a longitudinal score line formed under a two stage torque control is shown, and Fig. 7(B) is a cross-sectional view of a belt-like sheet glass in which a longitudinal score line formed under a constant torque is shown.

### EXPLANATION OF REFERENCE NUMERALS

10: apparatus for forming a score line in a belt-like sheet glass, 12: roller conveyor, 14: longitudinal score line forming machine, 16: transverse score line forming machine, 18: cutter, 20: cutter, 22: parallel link mechanism, 24: servo motor, 26: beam member, 28: slit, 30: support plate, 32: ball-nut unit, 34, 36, 38, 40: rotating shaft, 42, 44: rotating arm, 46: cutter supporting rod, 48: upper bracket, 50: lower bracket, 52: shock absorber, 54: servo amplifier, 56: control unit, 58: line speed detector, 60: ammeter, 62: pulse generator (PG), 64: motor

### DESCRIPTION OF EMBODIMENTS

In the following, description will be made as to preferred embodiments of the apparatus and method for forming a score line in a belt-like sheet glass and the method for producing a sheet glass of the present invention with reference to the drawings.

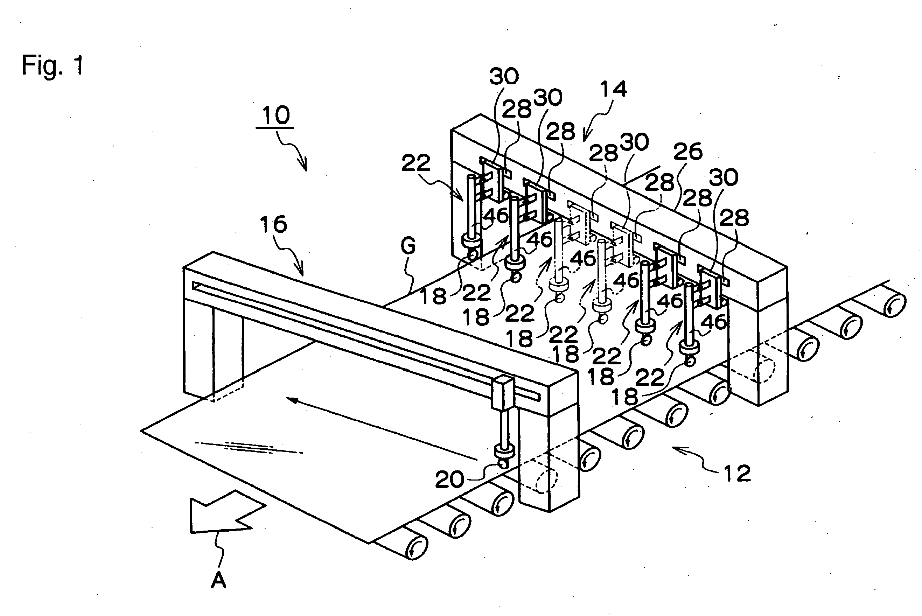

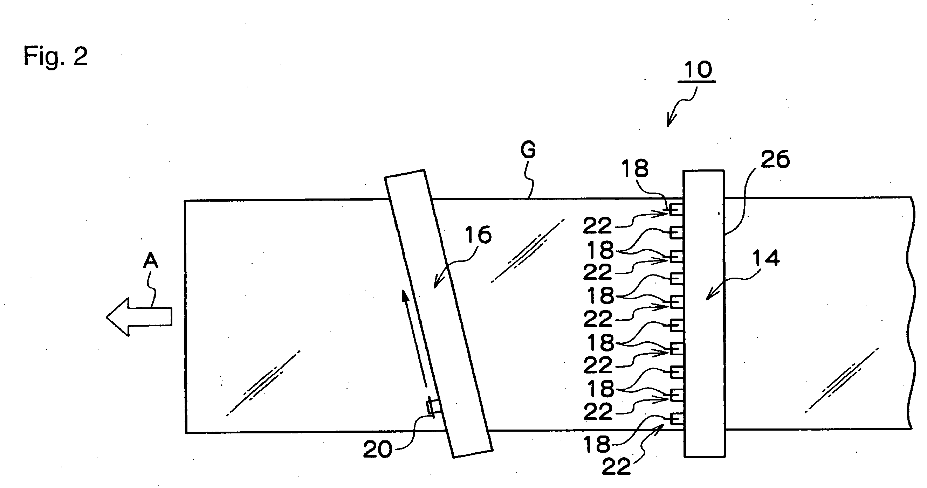

Fig. 1 is a perspective view showing an important portion of the score line forming apparatus 10 for a belt-like sheet glass according to an embodiment and Fig. 2 is a plane view of the score line forming apparatus 10 shown in Fig. 1. The score line forming apparatus 10 shown in Figs. 1 and 2 is a score line forming apparatus corresponding to the method for forming a score line so called touch-cutting, wherein longitudinal score lines and transverse score lines are formed in a belt-like sheet glass G conveyed successively by a roller conveyer (a conveying means) 12 from a belt-like sheet glass producing apparatus (not shown) utilizing a float method, which is located ahead of it (at an upstream side in a direction of conveyance of belt-like sheet glass). Behind the score line forming apparatus 10 (at a downstream side in a direction of conveyance of belt-like sheet glass), there is a glass snapping apparatus (not shown) and behind the glass snapping apparatus, there is a roller conveyer (not shown) which conveys sheet glass articles snapped in the glass snapping apparatus and sorts them into branches according to their sizes. The belt-like sheet glass producing apparatus, the roller conveyer (the conveying means), the glass snapping apparatus, the roller conveyer for conveying sheet glass articles having been snapped and sorting them into branches and the method for producing belt-like sheet glass utilizing these apparatuses, other than the above-mentioned score line forming apparatus, belong to known arts.

The score line forming apparatus 10 comprises a longitudinal score line forming machine 14 disposed at an upstream side in a direction of conveying the belt-like sheet glass G and a transverse score line forming machine 16 disposed at a downstream side thereof. With this longitudinal score line forming machine 14, longitudinal score lines in parallel to a direction of conveyance of belt-like sheet glass are formed in the belt-like sheet glass G, and with the transverse score line forming machine 16 disposed at a downstream side thereof, transverse score lines perpendicular to a direction of conveyance of belt-like sheet glass are formed in the belt-like sheet glass G.

The longitudinal score line forming machine 14 is provided with a plurality of cutters (first cutters) 18, 18... which are arranged in a direction of breadths of the belt-like sheet glass G. These cutters 18, 18... are advanced or retracted, by means of an advancing/retracting means which is described later, to the belt-like sheet glass G in conveyance by the roller conveyer 12. When they are advanced, they are pressed with a predetermined pressing force to the belt-like sheet glass G whereby longitudinal score lines in parallel to a direction of conveying the belt-like sheet glass G are formed in the belt-like sheet glass G.

The transverse score line forming machine 16 is provided with a cutter (a second cutter) 20. This cutter 20 is moved obliquely in a direction of conveyance of belt-like sheet glass in synchronism with a speed of conveyance of belt-like sheet glass whereby transverse score lines in a direction perpendicular to a direction of conveyance of belt-like sheet glass are formed in the belt-like sheet glass G. The arrow mark A in Figs. 1 and 2 indicates the direction of conveyance of belt-like sheet glass.

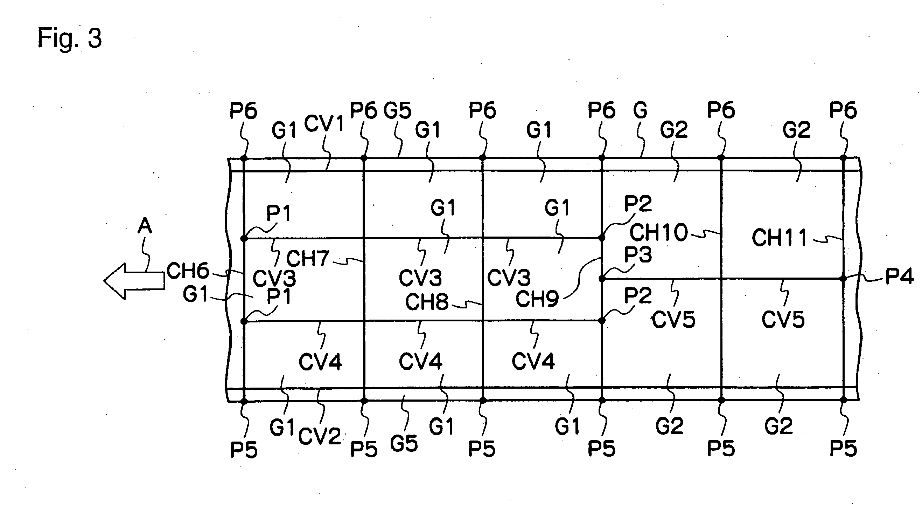

With reference to Fig. 3, a score line forming method called touch-cutting (a step of forming a score line for snapping) will be described.

This score line forming method is a method for forming longitudinal score lines CV1, 2, 3, 4, 5 (score lines formed in a first score line forming step) and transverse score lines CH6, 7, 8, 9, 10, 11 (score lines formed in a second score line forming step) in the belt-like sheet glass G in conveyance whereby two kinds of rectangular sheet glass G1, 2 having different sizes can be obtained from the belt-like sheet glass G in conveyance. The size of the obtainable sheet glass is not limited to two kinds but may be three kinds or more. In Fig. 3, the arrow mark A indicates the direction of conveyance of belt-like sheet glass.

The longitudinal score lines CV1, 2 in Fig. 3 are formed in order to remove edge portions of glass G5 from the belt-like sheet glass, the edge portions of glass having been brought in contact with the edge rollers in the molten tin bath of the belt-like sheet glass producing apparatus. Such longitudinal score lines are formed by two cutters 18, 18 disposed at the outmost sides of the cutters 18, 18... of the longitudinal score line forming machine 14. These two cutters 18, 18 are always in contact with the belt-like sheet glass under a predetermined pressing force whereby the longitudinal score lines CV1, 2 having a depth of cut suitable for snapping can successively be formed in the belt-like sheet glass G conveyed successively.

The longitudinal score lines CV3, 4 are formed to obtain sheet glass G1, G1..., with two cutters 18, 18 disposed at inner sides among the cutters 18, 18... of the longitudinal score line forming machine 14. These two cutters 18, 18 are advanced or retracted (vertically), by the advancing/retracting means which will be described later, with respect to the belt-like sheet glass G in synchronism with a speed of conveyance of the belt-like sheet glass G. Namely, the two cutters 18, 18 for forming the longitudinal score lines CV3, 4 are advanced toward starting points of forming score lines to be in contact with the belt-like sheet glass G; and thereafter, are continuously in contact with the belt-like sheet glass G with a predetermined pressing force, and then, they are retracted from the belt-like sheet glass G at the finish points of scoring P2, P2. Thus, the longitudinal score lines CV3, 4 having a depth of cut suitable for snapping are formed in the belt-like sheet glass G continuously conveyed.

The longitudinal score line CV 5 is formed to obtain a sheet glass G2 of larger size than the sheet glass G1 and is formed with the cutter disposed at the center among the cutters 18, 18... of the longitudinal score line forming machine 14. This cutter 18 is also advanced or retracted (vertically) with respect to the belt-like sheet glass G in conveyance in synchronism with the speed of conveyance of the belt-like sheet glass G by means of the advancing/retracting means which will be described later. Namely, the cutter 18 for forming the longitudinal score line CV5 is advanced toward the starting point of scoring P3 to be in contact with the belt-like sheet glass G; and thereafter, is continuously in contact with the belt-like sheet glass G with a predetermined pressing force, and then, is retracted from the belt-like sheet glass G at the finishing point of scoring P4. Thus, the longitudinal score line CV5 having a depth of cut suitable for snapping is formed in the belt-like sheet glass G conveyed successively.

The longitudinal score lines CV1, 2 may be formed with cutters arranged in line with other cutters as described above, or may be formed by cutters disposed at an upstream side of other cutters. Further, CV1, 2 are not always necessary to be continuous lines as shown in Fig. 3 but may be so formed that the distances from the edge portions of the belt-like sheet glass to CV1, 2 are different for each sheet glass supposed to be obtained. In such a case, CV1, 2 can be formed by changing cutters 18, 18 for each sheet glass supposed to be obtained.

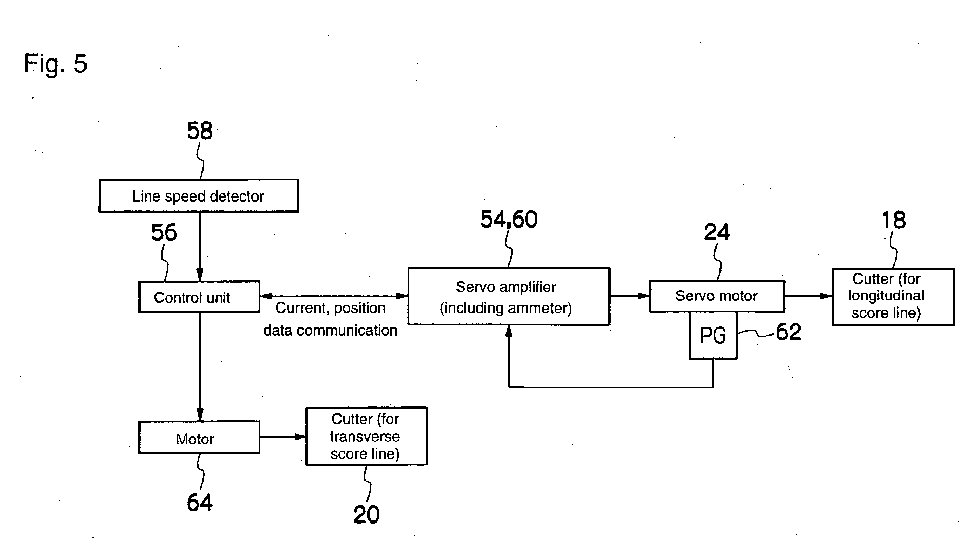

On the other hand, transverse score lines CH6, 7, 8, 9 are formed to obtain sheet glass G1 and they are formed sequentially one by one with the cutter 20 of the transverse score line forming machine 16. A score line forming apparatus 10 in which a plurality of transverse score line forming machines 16 are arranged may be used. In this case, transverse score lines CH6, 7, 8, 9 may be formed at a plural number or all together. The motor 64 (see Fig. 5) for moving the cutter 20 obliquely is controlled by a control unit (control means) 56 so that the speed of moving obliquely in synchronism with the speed of conveying the belt-like sheet glass G is controlled whereby transverse score lines CH6, 7, 8, 9 are formed in the belt-like sheet glass G in a direction perpendicular to a direction of conveyance of belt-like sheet glass. The cutter 20 can be moved vertically with respect to the belt-like sheet glass G by means of an actuator such as air cylinder or the like. With such actuator, the cutter 20 is descended previously at a position ahead of the start point of scoring P5 by a predetermined distance so as to form the transverse score lines CH6, 7, 8, 9 having a suitable depth of cut. Then, the cutter 20 is moved obliquely on the belt-like sheet glass G by the motor 64 whereby the transverse score lines CH6, 7, 8, 9 are formed. Then, the cutter 20, when it has passed the finishing point of scoring P6 by a predetermined distance, is moved upward from the belt-like sheet glass G by the actuator, and is restored by the motor 64 to the original standby position (the position indicated by a solid line in Figs. 1 and 2).

Transverse score lines CH10, 11 are formed to take sheet glass G2 and they are formed by the cutter 20 of the transverse score line forming machine 16. The description of the motions of the cutter 20 is omitted since these motions are same as those for forming the transverse score lines CH6, 7, 8, 9.

With these motions of the cutters 18, 18... for forming longitudinal score lines and the cutter 20 for forming transverse score lines, the longitudinal score lines CV1, 2, 3, 4, 5 and the transverse score lines CH6, 7, 8, 9, 10, 11 are formed in the belt-like sheet glass G in conveyance whereby two kinds of rectangular sheet glass G1, 2 having different sizes can be taken from the belt-like sheet glass G in conveyance.

In the method for forming a score line according to the touch-cutting, it is desired to minimize as possible distances between edge points of the longitudinal score lines CV3, 4, 5 formed by the longitudinal score line forming machine 14 and the transverse score lines CH6, 7, 8, 9, 10 , 11 formed by the transverse score line forming machine 16 according to a plan for taking sheet glass articles of designated sizes so that sheet glass articles of different sizes can be taken as much as possible from the belt-like sheet glass without waste. Accordingly, in order to minimize these distances, it is necessary to conduct precisely an on/off control for the score line forming motions of the cutters 18 of the longitudinal score line forming machine 14 for forming longitudinal score lines CV3, 4, 5, namely, control for advancing or retracting the cutters 18 to the belt-like sheet glass G in conveyance.

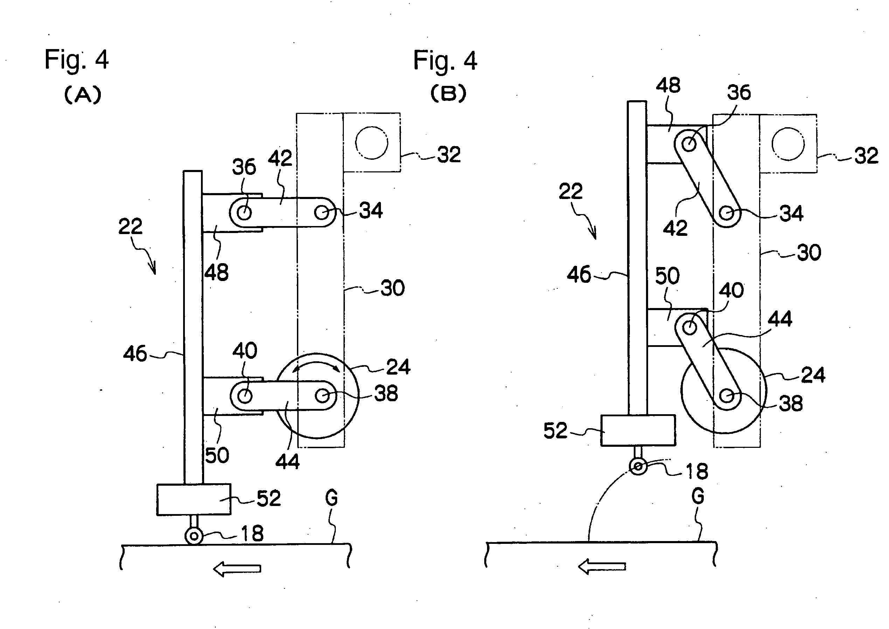

In the following, description will be made as to the structure and the motions of the advancing/retracting means to conduct precisely an advancing/retracting control to the cutters 18. As shown in Figs. 1 and 4, the cutters 18, 18... are attached to the beam member 26 with predetermined intervals by means of advancing/retracting means each consisting of a parallel link mechanism 22 and a servo motor 24 and a feeding means (not shown). The beam member 26 is disposed so as to bridge the roller conveyer 12 and extends in a direction perpendicular to the direction of conveyance of belt-like sheet glass. A ball-screw unit as the feeding means is disposed in the beam member 26 having a hollow body. By actuating the ball-screw unit, the cutters 18 slide via the advancing/retracting means in a horizontal slit 28 formed in the beam member 16 whereby the positions of the cutters 18 can be adjusted in a direction perpendicular to the direction of conveyance of belt-like sheet glass. The advancing/retracting means is connected to the ball-screw unit by engaging a ball-nut unit 32 provided on the support plate 30 for supporting the parallel link mechanism 22 as indicated by two-dotted chain line in Fig. 4, to the screw member of the ball-screw unit through a slit 28, as shown in Fig. 1.

The parallel link mechanism 22 shown in Fig. 4 comprises four rotating shafts 34, 36, 38, 40, two rotating arms 42, 44 parallel to each other and a cutter supporting rod 46 extending vertically. One end of the rotating arm 42 is attached rotatably to the rotating shaft 34 and the other end of the rotating arm 42 is attached rotatably to the rotating shaft 36 fixed to an upper bracket 48 of the cutter supporting rod 46. On the other hand, the rotating shaft 38 is connected directly to the rotating shaft (not shown) of the servo motor 26 fixed to the support plate 30 and is fixed to one end of the rotating arm 44. The other end of the rotating arm 44 is attached rotatably to the rotating shaft 40 which is fixed to a lower bracket 50 of the cutter supporting rod 46. The cutter 18 is attached to a lower end of the cutter supporting rod 46. It is preferable to provide a shock absorber 52 such as alphagel and a caster mechanism (not shown) between the cutter 18 and the cutter supporting rod 46.

In the position of scoring as shown in Fig. 4(A), when the rotating shaft of the servo motor 24 is rotated clockwise by a predetermined quantity, the rotating force is transmitted to the parallel link mechanism 22 hereby the cutter supporting rod 46 is raised as shown in Fig. 4(B). Thus, the cutter 18 is retracted from the belt-like sheet glass G. Further, in the position of retraction as shown in Fig. 4(B), when the rotating shaft of the servo motor 24 is rotated counterclockwise by a predetermined quantity, the rotating force is transmitted to the parallel link mechanism 24 whereby the cutter supporting rod 46 is descended as shown in Fig. 4(A). Thus, the cutter is brought in contact with the belt-like sheet glass G. The rotating device in the present invention is means for advancing or retracting the cutter 18 by the servo motor 24 via a link mechanism, and in this embodiment, the rotating device is constituted by the rotating arms 42, 44 of the parallel link mechanism 22 and the cutter supporting rod 46. The shock absorber 52 is not essential. However, it is preferable to provide it because it is possible to relieve an impact when the cutter contacts with the belt-like sheet glass G so as not to generate cullet.

The servo motor 24 gives a rotating force (a torque) to the cutter 18 via the parallel link mechanism 22 and produces a pressing force of the cutter to the belt-like sheet glass G whereby a longitudinal score line can be formed in the belt-like sheet glass G. The torque of the servo motor 24 is controlled by a control unit 56 via a servo amplifier 54 as shown in Fig. 5. Accordingly, by controlling the torque of the servo motor 24 by the control unit 54, the pressing force of the cutter 18 to the belt-like sheet glass G is determined.

The control unit 56 controls the torque of the servo motor 24 on the basis of a line speed (a speed of conveyance of belt-like sheet glass) output from a line speed detector 58 and conducts a two stage torque control to the servo motor 24 so that the pressing force at the time of starting scoring i.e., at the time when the cutter 18 is brought in contact with the belt-like sheet glass G, is smaller than the pressing force after the start of scoring. This two stage torque control will be described later.

The control unit 56 receives data, from an ammeter 60, of a signal indicative of a current value applied to the servo motor 24 (a signal indicative of the torque of the servo motor 24) and also receives a pulse signal indicative of a position of rotation and a speed of rotation of the servo motor 24 from a pulse generator (PG) 62 via the servo amplifier 54. The control unit 56 can detect the position of rotation of the servo motor 24 by counting a pulse signal from the pulse generator (PG) 62, and further, it can detect the speed of rotation of the servo motor 24 by counting a pulse signal received in a predetermined time. Further, the control unit 56 outputs to the servo amplifier 54 an instruction signal of torque to control the torque of the servo motor 24 on the basis of a signal indicative of a torque from the ammeter 60 or a pulse signal from the pulse generator (PG) 62. The servo amplifier 54 controls the torque of the servo motor 24 based on the instruction signal.

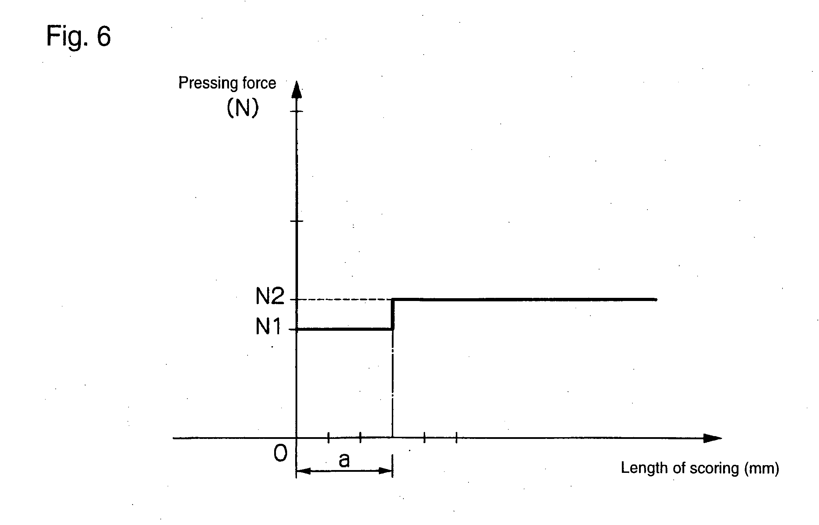

On the other hand, the memory of the control unit 56 memorizes previously motor current values to conduct the two stage torque control. Namely, as shown in the graph of Fig. 6, the pressing force (N1) at the time of starting scoring when the cutter 18 is brought in contact with the belt-like sheet glass G (a range from the position of 0 point to the point of a predetermined length a) is determined to be lower and the pressing force (N2) after the start of scoring is determined to be higher.

This control unit 56 executes the scoring according to touch-cutting by controlling the servo motor 24 and the motor 64 for moving obliquely the cutter 20 on the basis of a line speed.

In the following, features of the score line forming apparatus 10 for a belt-like sheet glass, having the structure described above, will be described.

This score line forming apparatus 10 forms in the belt-like sheet glass G being conveyed by the roller conveyer 12 longitudinal score lines CV3, 4, 5 (see Fig. 3, and hereinbelow, explanation of longitudinal score lines CV1, 2 is omitted) in parallel to a direction of conveyance of belt-like sheet glass, with the cutters 18, 18.... The servo motor 24 of high response is employed as an advancing/retracting means of the cutter 18 with respect to the belt-like sheet glass G, and by controlling the torque of the servo motor 24 by the control unit 56, the pressing force of each cutter 18 to the belt-like sheet glass G is controlled to form a longitudinal score line CV3, 4, 5 in the belt-like sheet glass G.

Further, as the advancing/retracting mechanism for each cutter 18, a parallel link mechanism 22 capable of converting directly the rotary motion of the servo motor 24 to the advancing/retracting motion of the cutter 18 is employed. Namely, the cutter 18 is provided at a lower end of the cutter supporting rod 46 as a part of the parallel link mechanism 22, and the rotating shaft of the servo motor 24 is connected directly to the rotating shaft 38 of the rotating arm 44. With this, the torque control by the servo motor 24, i.e., the control of pressing force of cutter 18 to the belt-like sheet glass G can be improved remarkably in comparison with the advancing/retracting mechanism such as gear-type feeding mechanism which converts the rotating motion of the servo motor 24 to a straight motion. Accordingly, it is possible to form in the belt-like sheet glass G the longitudinal score lines CV3, 4, 5 for snapping well the belt-like sheet glass G. Further, since the response of the advancing/retracting motion of the cutter 18 to the belt-like sheet glass G is good, it is possible to follow a minute deformation of sheet plane in the belt-like sheet glass G.

It is preferable as shown in Fig.4(A) that the scoring is started when the positions of the rotating arms 42, 44 of the parallel link mechanism 22 are horizontal. It is because the follow-up ability of the cutter 18 is improved for the following two changes: a change of sheet plane of the belt-like sheet glass G and a change of height of the belt-like sheet glass G owing to eccentricity in rollers constituting the roller conveyer 12. Accordingly, the scattering of pressing force can be suppressed.

In the score line forming apparatus 10 of this embodiment, the torque of the servo motor 24 is controlled in such manner that the pressing force (N1) as a pressure of scoring when the cutter 18 is brought in contact with the belt-like sheet glass G is a pressure of first stage and the pressing force (N2) applied thereafter is a pressure of second stage, as shown in the graph of Fig. 6. Namely, the pressing force (N2) of first stage is determined to be lower than the pressing force (N2) of second stage as a pressing force when a normal scoring is carried out. Accordingly, the generation of cullet when the cutter is brought in contact with the belt-like sheet glass G can be prevented. It is preferable that the proportion of the pressing force (N1) of first stage to the pressing force (N2) of second stage is about 1:1.1 to 1.2, more preferably 1:1.15 to 1.2. Further, it is preferable that the length a is 3 to 7 mm, more preferably 3 to 5 mm.

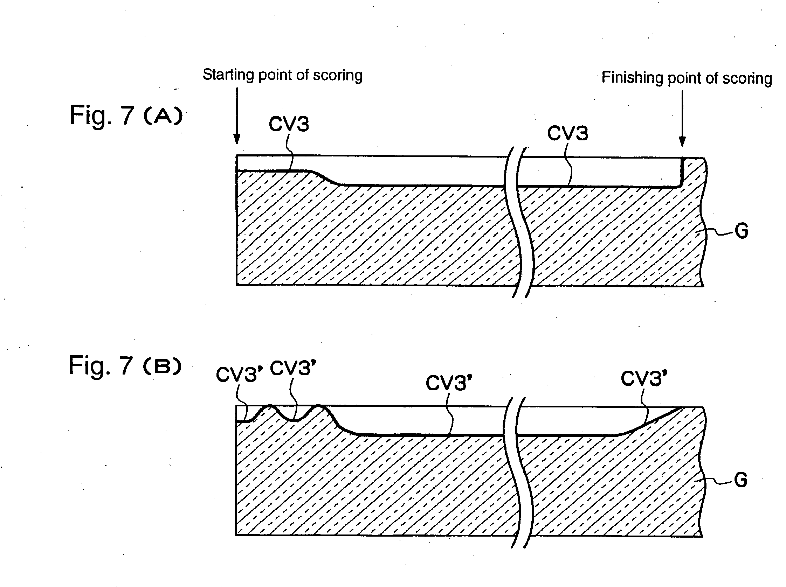

Fig. 7(A) is a cross-sectional view of a sheet glass G having a longitudinal score line CV3 formed under the two stage torque control. Fig. 7(B) is a cross-sectional view of a belt-like sheet glass G having a longitudinal score line CV3' formed according to the conventional technique wherein the longitudinal score line is formed under constant torque.

In the conventional technique shown in Fig. 7(B), there is a vibration of cutter due to a strong impact to the cutter when it comes to contact with the belt-like sheet glass G at the starting point of scoring, so that there are minute vertical movements of the cutter. Accordingly, the depth of cut of the longitudinal score line CV3' is not constant for a certain distance from the starting point of scoring. In addition, there is a disadvantage of generating cullet due to such strong impact. In the conventional technique, there is another disadvantage that because of the poor response in the retracting movement of the cutter, a score line which may result a lack of corner, namely, a score line of shallow cut remains in the sheet glass G at the finishing point of scoring when the cutter is retracted from the belt-like sheet glass G in conveyance.

On the other hand, in the score line forming apparatus 10 according to the embodiment in which the two stage torque control is carried out, the scoring can be started smoothly without any impact to the cutter 18 because the torque is determined to be low at the starting point of scoring, as in Fig. 7(A). Then, at a predetermined distance away from the starting point, the torque is increased to conduct the scoring with the normal depth of cut. At the finishing point of scoring, the servo motor 24 is driven for the retraction whereby the cutter 18 is instantaneously retracted from the belt-like sheet glass G by means of the parallel link mechanism 22 of high response. Accordingly, there is no score line of shallow cut at or near the finishing point of scoring unlike the conventional technique, and the longitudinal score line C3 of constant depth of cut can certainly be formed till the finishing point of scoring. The pressing force of second stage is determined depending on the thickness of the belt-like sheet glass G. It is preferred that the pressing force is increased as the thickness is larger.

It is preferable that the motion of the cutter 18 by the servo motor 24 is so controlled as to advance toward the belt-like sheet glass G at a speed in synchronism with the line speed. Further, it is preferable that the retracting motion of the cutter 18 by the servo motor 24 is so controlled as to retract instantaneously at the finishing point of scoring. Since the response of the retracting motion of the cutter 18 is quick, the cutter 18 is retracted completely from the belt-like sheet glass G at the finishing point of scoring (see Fig. 7(A)). Further, it is preferable to employ a cam shaft control for the cutter 18 and the servo motor 24 so that the torque control by the servo motor is improved.

In the production of the belt-like sheet glass G, the line speed is changed (for example, 50 to 1,250 m/h) depending on the thickness (1.8 to 6.0 mm) for example. However, in the score line forming apparatus 10 of this embodiment, since the response of the advancing/retracting motion of the cutter 18 is improved, the distance between the end point of a longitudinal score line formed by the cutter 18 and a transverse score line formed by the cutter 20 can be reduced (1 to 2 mm) without being influenced by the line speed, whereby the possibility of occurrence of a lack of corner in a sheet glass can be reduced remarkably. On the other hand, the distance between the end point of a longitudinal score line by the cutter utilizing an electromagnetic valve (solenoid) and a transverse score line according to the conventional technique has a scatter of 1 to 6 mm. The structure of this embodiment of the present invention employing the servo motor 24 and the parallel link mechanism 22 can reduce the distance between the edge point of a longitudinal score line and a transverse score line to 1/3 or less of that of the conventional technique using a cutter with an electromagnetic valve (solenoid).

The score line forming apparatus 10 of this embodiment is an apparatus corresponding to the touch-cutting employing the transverse score line forming machine 16. However, the present invention is not limited to this, but is also applicable to a score line forming apparatus wherein a cutter is advanced or retracted with respect to a sheet glass in conveyance and when it is advanced, a score line is formed. The belt-like sheet glass described in the present invention includes such sheet glass.

In this embodiment, description has been made as to the manufacturing of glass articles for automobiles. However, it is not limited to this and it is also applicable to scoring another belt-like sheet glass for buildings, PDP (Plasma Display Panel) and so on.

### INDUSTRIAL APPLICABILITY

The present invention can be used for cutting a belt-like sheet glass, in particular, it is suitable for cutting plural kinds of sheet glass having different sizes from a belt-like sheet glass in conveyance.

The entire disclosure of Japanese Patent Application No. 2007-119254 filed on April 27, 2007 including specification, claims, drawings and summary are incorporated herein by reference in its entirety.

## Claims

1. An apparatus for forming a score line in a belt-like sheet glass **characterized by** comprising,
a first cutter for forming in a belt-like sheet glass in conveyance a score line in parallel to a direction of conveyance,
a rotating device having a link mechanism capable of advancing or retracting the first cutter with respect to the belt-like sheet glass wherein the first cutter is provided on the link mechanism,
a servo motor connected to the rotating shaft of the rotating device at its base portion to swing the rotating device toward the belt-like sheet glass so that a pressing force is produced to the first cutter with respect to the belt-like sheet glass, and
a control means to control the torque of the servo motor so that the pressing force of the first cutter to the belt-like sheet glass at the time of starting scoring is smaller than the pressing force after the start of scoring.

2. The apparatus for forming a score line in a belt-like sheet glass according to Claim 1, wherein a second cutter is provided at a downstream side of the first cutter in a direction of conveyance of belt-like sheet glass, the second cutter being moved obliquely in a direction of conveyance of belt-like sheet glass so that a sore line is formed in a direction perpendicular to the direction of conveyance of belt-like sheet glass.

3. The apparatus for forming a score line in a belt-like sheet glass according to Claim 2, wherein the control means drives under control the servo motor and a motor for moving obliquely the second cutter based on a speed of conveyance of belt-like sheet glass so as to form a score line for snapping a rectangular glass sheet of predetermined size from the belt-like sheet glass in conveyance.

4. A method for forming a score line in a belt-like sheet glass wherein when a score line is formed with a first cutter in a belt-like sheet glass in conveyance, in parallel to a direction of conveyance of belt-like sheet glass, the torque of a servo motor is controlled by a control means and the controlled torque is transmitted to the first cutter via a link mechanism to form a score line in the belt-like sheet glass, the method for forming a score line in a belt-like sheet glass being **characterized by** comprising a first scoring step of controlling the torque of the servo motor by the control means so that the pressing force of the first cutter to the belt-like sheet glass at the time of starting scoring is smaller than the pressing force after the start of scoring.

5. The method for forming a score line in a belt-like sheet glass according to Claim 4 which comprises a second scoring step of moving obliquely a second cutter in a direction of conveyance of belt-like sheet glass to form a score line in the belt-like sheet glass in a direction perpendicular to the direction of conveyance, the second cutter being provided at a downstream side of the first cutter in the direction of conveyance of belt-like sheet glass.

6. The method for forming a score line in a belt-like sheet glass according to Claim 5 which comprises a step of forming a score line for snapping in a belt-like sheet glass in conveyance by driving, under control by the control means, the servo motor and the motor for moving obliquely the second cutter based on the speed of conveyance of belt-like sheet glass whereby a score line for snapping a rectangular sheet glass of predetermined size is formed in the belt-like sheet glass in conveyance.

7. A method for producing a sheet glass comprising a step of forming a belt-like sheet glass by a float method, a step of forming a score line in the belt-like sheet glass and a step of taking a glass sheet by snapping the scored belt-like sheet glass, the method being **characterized by** employing a method for forming a score line in a belt-like sheet glass as described in any one of Claims 4 to 6.
